**Europäisches Patentamt**

**European Patent Office**

**Office européen des brevets**

(11) Veröffentlichungsnummer: **0 005 816**
**A1**

## (12) EUROPÄISCHE PATENTANMELDUNG

(21) Anmeldenummer: **79101633.0**

(22) Anmeldetag: **28.05.79**

(51) Int. Cl.²: **G 02 F 1/13**
**G 09 F 9/30**

(30) Priorität: **31.05.78 DE 2823845**

(43) Veröffentlichungstag der Anmeldung:
**12.12.79 Patentblatt 79/25**

(84) Benannte Vertragsstaaten:
**AT BE CH FR GB IT NL SE** ·

(71) Anmelder: **SIEMENS AKTIENGESELLSCHAFT Berlin und München**
**Postfach 261**
**D-8000 München 22(DE)**

(72) Erfinder: **Bechteler, Martin, Dr.**
**Nelkenweg 10**
**D-8011 Kirchheim Ortsteil Heimstetten(DE)**

(54) **Anzeigevorrichtung zur Darstellung von veränderlichen und festen Informationen.**

(57) Die Erfindung befaßt sich mit Anzeigevorrichtungen, insbesondere Flüssigkristallzellen, die sowohl veränderliche als auch feststehende Informationen (Festzeichen) darstellen sollen.

Bei einem solchen Display ist erfindungsgemäß vorgesehen, daß die Festzeichen durch Körper (Abstandshalter 14, 16) gebildet werden, die zugleich die beiden Substrate (Trägerplatten 2,3) gegeneinander distanzieren. In einer bevorzugten Ausführung ist das Display eine sog. Drehzelle mit Abstandshaltern, die aus einem mit Distanzelementen (17) angereicherten Glaslot bestehen.

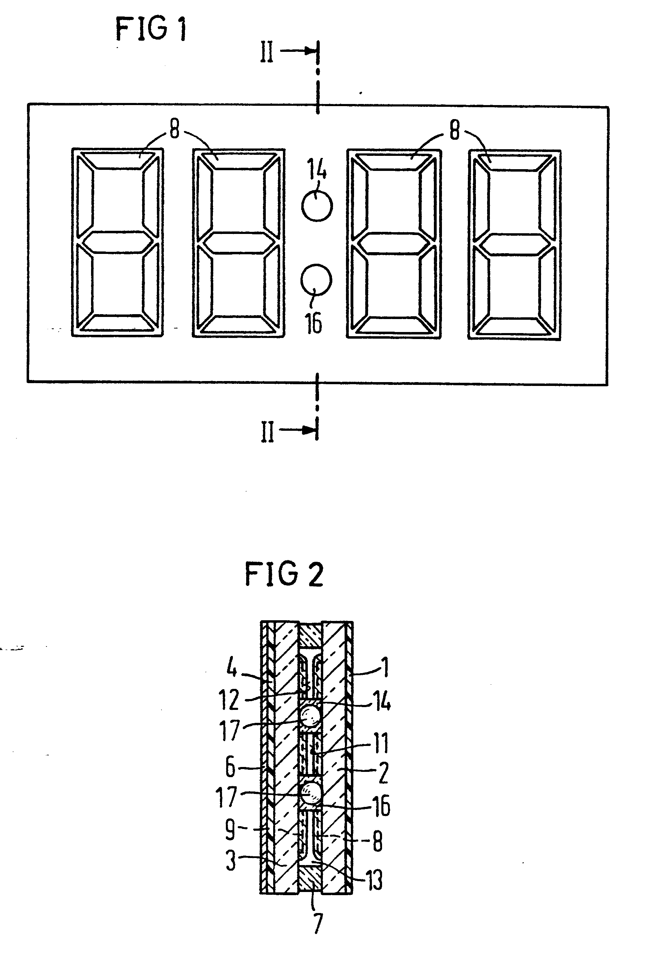

Die Erfindung findet Anwendung bei allen Arten von Displays, die einen relativ eng tolerierten Plattenabstand haben und Festzeichen enthalten; sie eignet sich besonders für Flüssigkristallanzeigen in Meßgeräten wie beispielsweise Tachometern oder in Uhren (Fig. 1).

FIG 1

SIEMENS AKTIENGESELLSCHAFT          Unser Zeichen
Berlin und München                  VPA 78 P 1 0 7 9 EUR

Anzeigevorrichtung zur Darstellung von veränderlichen und festen Informationen

Die Erfindung bezieht sich auf eine Anzeigevorrichtung gemäß dem Oberbegriff des Anspruchs 1.
Ein solches Display ist in vielen Variationen
bekannt; man vergl. hierzu beispielsweise den
in "Electronics" vom 18.08.77, Seiten 74 und 75
erschienenen Artikel, der sich mit Flüssigkristallanzeigen in Armbanduhren befaßt, oder die DE-
OS 24 35 088.

In vielen Fällen will man neben ständig wechselnden
Informationen auch unveränderliche Symbole zur Darstellung bringen. Diese Festzeichen könnten beispielsweise bei einem Meßgerät Skaleneinteilungen oder
Dimensionsangaben sein und bei Uhren als Ablesehilfe
zwischen der Stundenzahl und der Minutenzahl eingefügt sein. Bisher wurden die Festzeichen in aller
Regel durch einen Aufdruck oder durch eine Einprägung
in der Frontplatte erzeugt.

Die Erfindung stellt sich die Aufgabe, die Festzeichen bei einem bestimmten Displaytyp, nämlich einer Anzeige mit einem relativ eng tolerierten Plattenabstand, so zu realisieren, daß sie nicht nur gut leserlich sind sondern auch noch zur exakten Distanzierung der beiden Substrate beitragen. Diese Aufgabe wird erfindungsgemäß durch die im Patentanspruch 1 angegebene Anzeigevorrichtung gelöst.

Soweit man sich bisher mit Distanziertechniken befaßt hatte, war man stets darum bemüht, zu möglichst unsichtbaren Abstandskörpern zu kommen. Dieses Ziel ist aber trotz erheblicher Entwicklungsanstrengungen bis heutenoch nicht erreicht; denn gerade diejenigen Distanzelemente, die eine wohldefinierte Höhe haben, treten optisch störend in Erscheinung (Beispiel: Glaslotsäulen mit eingelagerten Glasfasern).

Die Erfindung schlägt demgegenüber einen neuen, für Anzeigen mit Festzeichen gangbaren Weg ein: Die Distanzkörper sind bewußt so gestaltet, daß sie gegen ihre Umgebung optisch kontrastieren; sie sind Träger spezieller Informationen. Die dadurch erzielten Vorteile liegen auf der Hand: Die Plattendistanzierung wird einfacher, und für die feststehenden Symbole benötigt man keinen speziellen Fertigungsschritt mehr.

Die Erfindung wird nun anhand eines bevorzugten Ausführungsbeispiels unter Bezugnahme auf die beigefügte Zeichnung näher erläutert. In den Figuren der Zeichnung sind einander entsprechende Teile mit gleichen Bezugszeichen versehen. Es zeigen:

Fig. 1 das Ausführungsbeispiel in einer Vorderansicht und

Fig. 2 das Ausführungsbeispiel der Fig. 1 im Schnitt II-II.

Die Figuren sind schematisch gehalten. Für ein Verständnis der Erfindung nicht unbedingt erforderliche Einzelteile eines Displays, beispielsweise die elektrischen Zuleitungen, sind der Einfachheit halber weggelassen.

Die dargestellte Anzeigevorrichtung ist eine Flüssigkristallanzeige, die für eine Uhr vorgesehen ist und die Uhrzeit nach Stunden und Minuten angeben kann. Das Display arbeitet im vorliegenden Fall nach dem Prinzip der Drehzelle und besteht im einzelnen aus einem vorderen Linearpolarisator 1, einer vorderen Trägerplatte 2, einer hinteren Trägerplatte 3, einem hinteren, zum vorderen gekreuzten Linearpolarisator 4 und einem Reflektor 6. Die beiden Trägerplatten sind über einen Rahmen 7 dicht miteinander verbunden und tragen auf ihren einander zugewandten Flächen jeweils elektrisch leitfähige Beläge (Vorderelektroden mit einzelnen Segmentelektroden 8, Rückelektroden 9) sowie Orientierungsschichten 11 bzw. 12. Die vom Rahmen und den beiden Substraten begrenzte Kammer ist mit einer Flüssigkristallschicht 13 gefüllt. Der Fig. 1 ist zu entnehmen, daß die Stundenanzeige von der Minutenanzeige durch einen Doppelpunkt optisch abgehoben wird. Der Doppelpunkt ist ein feststehendes Zeichen.

Aus der Fig. 2 geht hervor, daß der Doppelpunkt durch zwei säulenförmige Abstandshalter 14, 16 erzeugt wird. Diese Säulen bestehen aus einem in Siebdrucktechnik aufgebrachten, mit Distanzelementen 17 versehenen Glaslot; sie legen die Dicke der Flüssigkristallschicht 13, die beispielsweise 8 /um betragen kann, fest. Besteht auch der Rahmen 7 aus dem gleichen Material wie die Abstandshalter, so lassen sich die beiden Substrate auf besonders rationelle Weise in richtigem Abstand miteinander verfestigen.

Für die Abstandshalter kommen die auch sonst gebräuchlichen Werkstoffe infrage: Statt einem Glaslot könnte man einen Kleber verwenden und die Masse bei Bedarf mit Glaskugeln, Glasfasern, Metallteilchen oder anderen geeigneten Distanzelementen anreichern. Dabei ließen sich mit elektrisch leitenden Distanzelementen zugleich auch noch die Elektroden der einen Trägerplatte auf das Niveau der Elektroden der anderen Trägerplatte überführen.

Die geschilderte Drehzelle wird in einem an sich bekannten Vier-Schritt-Multiplexverfahren angesteuert. Es entsteht ein Bild mit dunklen Ziffern auf hellem Grund. Auch der Doppelpunkt ist ohne spezielle Präparation dunkel, da die Abstandshalter wie die aktivierten Flüssigkristallbereiche optisch inaktiv sind.

Wollte man die feststehenden Symbole von den schaltbaren Zeichen optisch abheben, so könnte man die Abstandshalter entsprechend einfärben.

Die Erfindung ist nicht auf die dargestellte Ausführungsform beschränkt. So kann die vorgeschlagene Festzeichendarstellung ganz allgemein bei jedem Displaytyp Verwendung finden, bei dem sich eine Plattendistanzierung mit speziellen Abstandselementen empfiehlt. Dies wird vor allem bei multiplexbaren Anzeigen und bei dünnwandigen und/oder großflächigen
Zellen der Fall sein.

7 Patentansprüche
2 Figuren

0005816

Patentansprüche

1. Anzeigevorrichtung zur Darstellung von veränderlichen und festen Informationen, insbesondere Flüssigkristallzelle, mit zwei Trägerplatten, die ein zwischen optisch verschiedenen Zuständen schaltbares Medium zwischen sich einschließen, d a d u r c h g e k e n n z e i c h n e t , daß die festen Informationen (Festzeichen) zumindest teilweise durch Abstandshalter (14,16) dargestellt sind, die sich zwischen den beiden Trägerplatten (2,3) befinden und optisch gegen ihre Umgebung kontrastieren.

2. Anzeigevorrichtung nach Anspruch 1, d a d u r c h g e k e n n z e i c h n e t , daß die Abstandshalter (14,16) aus Glaslot bestehen.

3. Anzeigevorrichtung nach Anspruch 2, d a d u r c h g e k e n n z e i c h n e t , daß das Glaslot elektrisch leitende oder elektrisch isolierende Distanzelemente (17) enthält.

4. Anzeigevorrichtung nach Anspruch 1, d a d u r c h g e k e n n z e i c h n e t , daß die Abstandshalter (14,16) aus einem mit elektrisch leitenden oder elektrisch isolierenden Distanzelementen (17) versehenen Kleber bestehen.

5. Anzeigevorrichtung nach Anspruch 3 oder 4, d a d u r c h g e k e n n z e i c h n e t , daß die Distanzelemente (17) Kugeln oder Fasern sind, die insbesondere aus Glas oder Metall bestehen.

6. Anzeigevorrichtung, deren Trägerplatten über einen Rahmen miteinander verbunden sind, nach einem der Ansprüche 1 bis 5, d a d u r c h  g e k e n n - z e i c h n e t , daß die Abstandshalter (14,16) aus dem gleichen Material wie der Rahmen (7) bestehen.

7. Anzeigevorrichtung nach einem der Ansprüche 1 bis 6, g e k e n n z e i c h n e t  d u r c h  ihre Ver-wendung in einem Meßgerät, insbesondere einem Tachometer, oder in einer Uhr.

## FIG 1

II →

8          14          8

16

II →

## FIG 2

4
12
17          14
6          11
          2
17          16
9          8
3
          13

7

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | <u>DE - B - 2 348 691</u> (SIEMENS)<br>* Patentanspruch; Figuren 1-2 * | 1 |
| | -- | |
| A | <u>US - A - 3 936 930</u> (H.A. STERN)<br>* Patentanspruch 1; Figuren 1-2 * | 1-4 |
| | -- | |
| A | <u>FR - A - 2 342 567</u> (B.B.C. S.A.)<br>* Seite 2, Zeilen 28-39; Seite 3, Zeilen 1-13; Patentansprüche 1,9,10; Figuren 1-3 * | 1-5 |
| | ---- | |

**KLASSIFIKATION DER ANMELDUNG (Int.Cl.²)**

G 02 F    1/13
G 09 F    9/30

**RECHERCHIERTE SACHGEBIETE (Int. Cl.²)**

G 02 F    1/13
G 04 C   17/00
G 02 F    1/01
G 02 F    1/17
G 09 F    9/30

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-09-1979 | ARMITANO GRIVEL |

EPA form 1503.1   06.78